Europäisches Patentamt

European Patent Office

Office européen des brevets

(11) Veröffentlichungsnummer: **0 367 023 B1**

(12) # EUROPÄISCHE PATENTSCHRIFT

(45) Veröffentlichungstag der Patentschrift: **22.12.93**

(51) Int. Cl.5: **C08K 7/00**, C08L 33/12

(21) Anmeldenummer: **89119326.0**

(22) Anmeldetag: **18.10.89**

Die Akte enthält technische Angaben, die nach dem Eingang der Anmeldung eingereicht wurden und die nicht in dieser Patentschrift enthalten sind.

(54) **Herstellen von Formteilen aus einem kleinteiligen Zuschlagstoff sowie einer ein Acrylatpolymeres enthaltenden Bindemittelzubereitung.**

(30) Priorität: **26.10.88 DE 3836433**

(43) Veröffentlichungstag der Anmeldung:
**09.05.90 Patentblatt 90/19**

(45) Bekanntmachung des Hinweises auf die Patenterteilung:
**22.12.93 Patentblatt 93/51**

(84) Benannte Vertragsstaaten:
**AT BE CH DE ES FR GB IT LI NL SE**

(56) Entgegenhaltungen:
**EP-A- 0 178 612**

**CHEMICAL ABSTRACTS, Band 104, Nr. 8, Seite 292, 1986, Zusammenfassung Nr. 55352n, Columbus, Ohio, US; & JP-A-60 103 070**

**CHEMICAL ABSTRACTS, Band 104, Nr. 6, Seite 45, Zusammenfassung Nr. 34964y, Columbus, Ohio, US; & JP-A-60 155 762**

**"Kunststoff-Additive", 2. Ausgabe, Carl Hanser Verlag München Wien 1983, Absatz 9.3.2.1.1, Seiten 426-427**

(73) Patentinhaber: **BASF Aktiengesellschaft
Carl-Bosch-Strasse 38
D-67063 Ludwigshafen(DE)**

(72) Erfinder: **Dotzauer, Bernhard, Dr.
Woehlerstrasse 12f
D-6701 Maxdorf(DE)**
Erfinder: **Beckerle, Wilhelm Friedrich
Beethovenstrasse 20 1/2
D-6712 Bobenheim-Roxheim(DE)**
Erfinder: **Denu, Hans-Jürgen
Koenigsgarten 2
D-6705 Deidesheim(DE)**
Erfinder: **Wendel, Kurt, Dr.
Woehlerstrasse 26
D-6700 Ludwigshafen(DE)**
Erfinder: **Schwartz, Manfred, Dr.
Friesenstrasse 24
D-6700 Ludwigshafen(DE)**

EP 0 367 023 B1

**Beschreibung**

Die vorliegende Erfindung betrifft ein Verfahren zum Herstellen von Formteilen aus einem kleinteiligen, körnigen bis faserförmigen Material, ausgenommen Holz, als Zuschlagstoff sowie einer ein Acrylatpolymeres enthaltenden wäßrigen Bindemittellösung, wobei man den Zuschlagstoff mit der Bindemittellösung befeuchtet, in die gewünschte Form überführt und anschließend - gegebenenfalls in der Wärme - zur Trockene bringt.

Verfahren dieser Art sind in einer Reihe von Varianten bekannt, z.B. aus den US-Psen 4 189 345 und 4 187 142, sowie aus der DE-OS 2 924 085.

Die genannten Schriften beschreiben ein allgemeines Verfahren, bei dem die Zuschlagstoffe zusamen mit dem - gegebenenfalls ausgefällten - Bindemittel auf einem Langsieb abfiltriert werden ("Blattbildung") und anschließend bei erhöhter Temperatur getrocknet werden.

Auf diese Weise stellt man beispielsweise aus Kaolin, Mineralfasern und Stärken Deckenplatten her. Der gravierende Nachteil solcher an sich sehr steifen Platten ist, daß sie in feuchten Räumen, besonders aber in feuchten und warmen Räumen - also unter tropischem Klima - ihre Form verlieren, d.h. unter ihrem Eigengewicht durchbiegen. Der optische Eindruck solcher durchbogener Decken ist häßlich und daher unerwünscht. Ein weiterer Nachteil ist die Empfindlichkeit solcher Flächengebilde gegenüber dem Abbau des Bindemittels Stärke durch Mikroorganismen, was durch dunkle Flecken und dem Verlust der mechanischen Festigkeit zum Ausdruck kommt. Natürlich kann man solche Platten mit Mikrocbicide ausrüsten wie z.B. mit Formaldehyd-Depotstoffen. Diese gewährleisten durch allmähliche Abgabe von Formaldehyd einen Schutz gegen den Befall. Um aber einen langjährigen Schutz zu gewährleisten, muß man höhere Konversierungsmitteldosierungen wählen, die zu Geruchsbelästigungen und unter Umständen zu allergischen Reaktionen der Bewohner führen können.

Andere, in der Praxis vielfach bewährte Herstellungsverfahren sind das Befeuchten von mehr oder weniger geordneten, meist faserigen Zuschlagstoffen durch Besprühen oder Tauchen mit nachfolgendem Abquetschen und anschließender Trocknung bei erhöhter Temperatur, wobei man durch mehr oder weniger starkes Pressen während der Trocknung die Raumgewichte solcher Flächengebilde einstellen kann.

Schließlich ist auf die allgemein bekannte Verfahrensweise bei der Herstellung von Holzspanplatten zu verweisen, bei der man die Holzspäne mit wäßrigen Lösungen von meist Harnstoff-Formaldehydkondensaten besprüht und unter Druck und Temperatur aushärtet.

Körnige Zuschlagstoffe befeuchtet man mit der Bindemittelzubereitung, bringt diese Mischungen in Formen und entfernt das Wasser meist nach der Entformung.

Wie schon angedeutet, sind dem Stand der Technik entsprechend die fast ausnahmslos bevorzugten Bindemittelzubereitungen wäßrige Lösungen von Kondensationsprodukten auf der Basis von Phenol, Melamin und/oder Harnstoff mit Formaldehyd. Obwohl es sich dabei um Jahrzehnte-lang bewährte Bindemittel handelt, wurden erst in jüngster Zeit gravierende Nachteile erkannt. So enthalten sie nämlich stets kleinere Mengen der Ausgangsstoffe wie z.B. Phenol und/oder Formaldehyd, die teilweise bei der Verarbeitung an die Luft am Arbeitsplatz abgegeben werden. Dieser Umstand zwingt im zunehmenden Maß zu stärkerer Belüftung der Produktionsräume. Leider gelangen auf diese Weise die Stoffe auch in die Atmosphäre, was wiederum zu weiteren Maßnahmen zwingt. Darüber hinaus sind die Ausgangsstoffe auch noch in den fertigen Formteilen enthalten und können so in Spuren in die Luft von Wohn- und Büroräumen und sogar von Kraftfahrzeugen gelangen. Letztlich stören diese Verunreinigungen bei der Entsorgung der Formteile auf Deponien, wenn die Formteile Phenolharze enthalten.

Hier setzt die Aufgabe der vorliegenden Erfindung an:

Ein Verfahren der oben definierten Art aufzuzeigen mit dem Formteile erhältlich sind, die die vorerwähnten Nachteile nicht oder in erheblich geringerem Umfang aufweisen.

ES wurde gefunden, daß die gestellte Aufgabe gelöst werden kann, wenn man bei dem eingangs definierten Verfahren eine Bindemittellösung einsetzt, deren pH-Wert nicht weniger als 7 beträgt und deren Bindemittel ein Acrylatpolymerisat ist, dessen Glasübergangsbereich mindestens $60\,°C$ beträgt und das aufgebaut ist aus

(A) 60 bis 75 Gew.-% Methylmethacrylat,

(B) 25 bis 35 Gew.-% (Meth)acrylsäure,

(C) gegebenenfalls einem $C_1$- bis $C_8$-Alkylesters der Acrylsäure, sowie

(D) 0 bis 1 Gew.-% anderer copolymerisierbarer Verbindungen,

wobei (A) + (B) + (C) + (D) = 100 Gew.-%.

Gegenstand der vorliegenden Erfindung ist dementsprechend ein Verfahren zum Herstellen von Formteilen aus einem kleinteiligen, körnigen bis faserförmigen Material, ausgenommen Holz, als Zuschlagstoff sowie einer ein Acrylatpolymeres enthaltenden wäßrigen Bindemittellösung, wobei man den Zuschlag-

2

EP 0 367 023 B1

stoff mit der Bindemittellösung befeuchtet, in die gewünschte Form überführt und anschließend - gegebenenfalls in der Wärme - zur Trockene bringt.

Das erfindungsgemäße Verfahren ist dadurch gekennzeichnet, daß man eine Bindemittellösung einsetzt, deren pH-Wert nicht weniger als 7 beträgt und deren Bindemittel ein Acrylatpolymerisat ist, dessen Glasübergangsbereich mindestens 60°C beträgt, vorzugsweise im Bereich von 80 bis 120°C liegt, aber auch bis 150°C betragen kann, und das aufgebaut ist aus

(A) 60 bis 75 Gew.-% Methylmethacrylat,

(B) 25 bis 35 Gew.-% (Meth)acrylsäure,

(C) gegebenenfalls einem $C_1$- bis $C_8$-, vorzugsweise $C_1$-bis $C_4$-Alkylesters der Acrylsäure, sowie

(D) 0 bis 1 Gew.-% spezieller anderer polymerisierbarer Verbindungen, wie Vernetzern oder ähnlichen, wobei (A) + (B) + (C) + (D) = 100 Gew.-%.

Überraschenderweise können bei dem erfindungsgemäßen Verfahren die vorstehend aufgezeigten nachteiligen Eigenschaften der vergleichbaren bekannten Verfahren durch den Einsatz der oben bezeichneten speziellen Methylmethacrylat-Polymerisate vermieden werden. Obwohl diese Thermoplaste sind, erfüllen sie als Bestandteile der Formkörper alle Bindefunktionen der Duroplaste wie z.B. Steifigkeit. Überraschend ist ferner, daß diese hydrophilen Polymeren die Steifigkeit der Formkörper auch in feuchter und warmer Atmosphäre gewährleisten.

Als weiteres Positivum kommt hinzu, daß diese Polymeren sich leicht durch Emulsionspolymerisation herstellen lassen. Aufgrund ihres sehr niedrigen Restmonomerengehaltes sind die Polymeren weitgehend geruchsarm und physiologisch unbedenklich. Die Konservierung der Formkörper ist entbehrlich, da die Polymeren unter diesen Bedingungen nicht abgebaut werden. Trotzdem bereitet die Entsorgung von Bindemittelresten und auch der damit hergestellten Formkörper keine Probleme. Die Polymerisate bilden mit mehrwertigen Ionen wie z.B. Ca-Ionen, Mg-Ionen oder Fe(III)-Ionen in Wasser unlösliche Verbindungen und können somit nicht ins Grundwasser gelangen. Die Calciumverbindungen adsorbieren sehr ausgeprägt an die Feststoffpartikel in Kläranlagen. Von Vorteil ist weiter, daß diese Polymerisate nur auf Kohlenstoff, Wasserstoff und Sauerstoff aufgebaut sind.

Das erfindungsgemäße Verfahren als solches kann in einschlägig üblicher Weise durchgeführt werden, wobei darauf hinzuweisen ist, daß der Kern der Erfindung nicht die Durchführung des Verfahrens als solches ist, sondern die bei dem Verfahren eingesetzte, oben definierte und für die Erfindung kennzeichnende Bindemittellösung.

Statt breiterer Ausführungen zur Durchführung des erfindungsgemäßen Verfahrens kann daher insoweit auf einschlägige Publikationen verwiesen werden, z.B. auf die eingangs aufgeführten.

Ergänzend dazu ist allenfalls das folgende zu bemerken:

Die erfindungsgemäßen Polymerlösungen erlauben eine große Variationsbreite in Hinblick auf die Herstellungsverfahren der Formteile.

Man kann bei der Herstellung von Flächengebilden die Blattbildung auf dem Langsieb vornehmen und bei erhöhter Temperatur (ca. 90°C und höher) trocknen. Es ist auch möglich, nach der Blattbildung einen Verformungsprozeß vorzunehmen und erst dann bei erhöhter Temperatur zu trocknen.

Weiterhin ist es möglich, alle Zuschlagstoffe im trockenen oder feuchten Zustand zu mischen ("Wirbelbett") und danach zu verformen und, vorzugsweise in der Wärme, zu trocknen.

Vorteilhaft für die Verarbeitung ist der niedrige Restmonomerengehalt der erfindungsgemäß einzusetzenden Polymerisate, der meist deutlich unter 500 ppm - bezogen auf die Lösung - liegt. Dies bedeutet, daß die Arbeitsstoffkonzentration in der Luft am Arbeitsplatz außerordentlich niedrig ist und daß die Fertigartikel praktisch geruchsfrei sind.

Die erfindungsgemäßen Bindemittellösungen können vor allem zum Herstellen von Formteilen aus Mineralfasern, z.B. Steinwolle, Basaltwolle und/oder Glasfasern mit Faserlängen von meist 0,2 bis 8, insbesondere 0,5 bis 5 cm und Dicken von etwa 1,7 bis 3,3 dtex sowie ferner feuergetrockneten Sanden als Zuschlagstoffen eingesetzt werden; sie können daher z.B. sehr gut für die Herstellung von Mineralfaserplatten ("Akustikplatten"), Mineralfasermatten oder Formteilen für das Gießen von Metallen eingesetzt werden.

Dem Stand der Technik entsprechend können die steifen, ca. 1 bis 3 cm dicken Mineralfaserplatten Füllstoffe, wie feinteilige Tone, z.B. Kaolin und Montmorillonit, Feldspat, Kreide, Kieselgur und/oder Glimmer enthalten, deren Menge bis zu 30 %, bezogen auf Mineralfasern, vorzugsweise 10 bis 20 %, beträgt.

Zusätzlich können die Mineralfaserplatten, die im allgemeinen ein sehr günstiges Brandverhalten haben, noch bis zu 10, vorzugsweise 1-3 Gew.-% bezogen auf Mineralfasern übliche Brandschutzmittel, z.B. Aluminiumsilikate und -hydroxide, Borate und/oder Phosphate enthalten.

Schließlich fügt man bei der Herstellung der Mineralfaserplatten meist noch bis zu 5, vorzugsweise 1 bis 2 Gew.-%, bezogen auf die Mineralfasern an üblichen Hydrophobierungsmitteln wie Silikone (Polysiloxane) und/oder Wachse zu.

3

Die neuartigen Mineralfaserplatten können auf ihrer Sichtfläche mit bekannten schallabsorbierenden Strukturen versehen und in an sich bekannter Weise mit Dekorbeschichtungen versehen sein. Die auf diese Weise erhaltenen Schalldämm(decken)-Platten haben sehr gutes Dämmverhalten, sind sehr steif - auch im feuchten Zustand - und geben die aufgenommene Feuchte sehr leicht wieder ab.

Wie oben bereits dargelegt, ist der Kernpunkt der vorliegenden Erfindung die Verwendung einer speziellen wäßrigen Bindemittellösung im Rahmen des eingangs definierten Verfahrens. Diese Bindemittellösungen sind als solche bekannt, z.B. aus den US-PSen 3 740 367, 3 057 812.

Für den erfindungsgemäßen Zweck ist es bedeutsam, daß die eingesetzten Acrylatpolymerisate solche sind, deren Glasübergangsbereich mindestens 60°C - bis hinauf zu 150°C - beträgt. Es sei in diesem Zusammenhang erwähnt, daß sich die Glastemperatur nach üblichen Methoden bestimmen läßt, z.B. aus der Messung des E-Moduls im Kriechversuch als Funktion der Temperatur oder mit der Differentialthermoanalyse (DTA) (s. dazu A. Zosel, Farbe und Lack 82 (1976), 125-134).

Wie sich gezeigt hat, sind für den erfindungsgemäßen Zweck besonders geeignete Bindemittellösungen 10 bis 25, vorzugsweise 15 bis 20, gew.-%ige, wäßrige Lösungen von Polymerisaten die aufgebaut sind aus

(A) 60 bis 75 Gew.-% Methylmethacrylat,

(B) 25 bis 35 Gew.-% Methacrylsäure,

(C) gegebenenfalls einem $C_1$- bis $C_4$-Alkylesters der Acrylsäure, wie insbesondere Methylacrylat, Ethylacrylat, n-Butylacrylat, tert.-Butylacrylat,

(D) sowie 0 bis 1 Gew.-% spezieller anderer polymerisierbarer Verbindungen, wie Divinylbenzol, Butandioldi(meth)acrylat, Diallylphthalat,

wobei (A) + (B) + (C) + (D) = 100 Gew.-%.

Die Polymerlösungen stellt man durch Zusatz von Ammoniak zu Polymerdispersionen her, die man durch Emulsionspolymerisation bevorzugt in Gegenwart von 0,1 bis 3 Gew.-%, bezogen auf Polymerisat, an anionaktiven Emulgatoren wie z.B. $C_{12}$-$C_{14}$-Alkylsulfonat gewinnt.

Die Lösungen sind mit Ammoniak auf einen pH-Wert von mindestens 7, vorzugsweise von 7,5 bis 8,5 eingestellt.

Zu den erfindungsgemäß einzusetzenden Bindemittellösungen ist ferner noch das folgende zu bemerken:

Als Bindemittellösungen für die Herstellung von (steifen) Mineralfaserplatten (Mineralfaserschalldämmplatten, "Akustik-Platten") haben sich besonders Lösungen von Polymerisaten aus etwa 70 Gew.-% Methylmethacrylat und 30 Gew.-% Methacrylsäure in Form ihrer Ammoniumsalze bewährt.

Die beim Verfahren gemäß der vorliegenden Erfindung einzusetzenden Zuschlagstoffe können die einschlägig üblichen, ausgenommen Holz, sein; dabei ist es von Vorteil, daß die erfindungsgemäß einzusetzenden Bindemittelzubereitungen eine sehr gute Adhäsion zu sehr verschiedenen Stoffen haben. So eignen sich im gegebenen Zusammenhang als Zuschlagstoffe z.B. Mineral- und/oder Glasfasern, feuergetrocknete Sande oder Tone

Im Rahmen der nachstehend geschilderten Beispiele werden die folgenden Prüfmethoden angewandt:

Dichte der Mineralfaserplatten

Ausschneiden von Prüfkörpern mit den Maßen 250 mm x 50 mm. Die Dicke wird mit einer Schieblehre bestimmt und zur Berechnung des Volumens verwendet. Berechnung der Dichte in g/cm$^3$ Mittelwert aus 2 Prüfkörpern.

Wasseraufnahme

Prüfkörper mit den Längsmaßen 250 mm x 50 mm werden unter Gewichtsbelastung 1 bzw. 2 Stunden bei Raumtemperatur unter Wasser gelagert. Gewichtszunahme nach sorgfältigem Abtupfen durch Wägen. Mittelwert aus jeweils 2 Prüfkörpern in Prozent der Gewichtszunahme.

Formbeständigkeit (Maß für die Steifigkeit)

Man schleift mittels Bandschleifgerät Prüfkörper mit den Maßen 250 mm x 50 mm bis diese 15 mm dick sind. Geschliffen wird auf der dem Sieb bei der Blattbildung abgewandten Seite.

Die so gewonnenen Prüfkörper werden in einem Klima von 38°C und 95 % relativer Luftfeuchte flachseitig nahe den Endkanten waagrecht aufgelegt und in der Mitte mit einem 1 kg-Gewicht belastet, so daß sich die Belastung auf die Gesamtlänge des Prüfkörpers auswirkt. Die Durchbiegung des Prüfkörpers wird im entlasteten Zustand gemessen und so ein Anhaltspunkt für das Langzeitverhalten von Mineralfaserplatten ermittelt.

Festigkeit

Die gehärteten Prüfkörper (Maße 17 cm x 2 cm x 2 cm) aus Kernsand und Bindemittel werden nahe den Endkanten aufgelegt und in der Mitte mit einer kontinuierlich steigenden Kraft belastet, so daß sich die Belastung auf die Gesamtlänge des Prüfkörpers auswirkt. Die beim Bruch anliegende Kraft wird als Mittelwert von fünf Prüfkörpern in kg/cm$^2$ angegeben.

Reißkraft

Die Reißkraft wird nach DIN 53 455 ermittelt.

Glühverlust

Der Glühverlust wird in Anlehnung an DIN 52 911 bestimmt.

Beispiel 1

Man verteilt unter gutem Rühren 250 g Mineralwolle und 150 g Kaolin in 3 l Wasser, die 2200 g einer 9 %igen wäßrigen mit Ammoniak auf pH 7,8 eingestellten Lösung eines Bindemittelpolymerisates 60 Gew.-Teilen Methylmethacrylat, 10 Gew.-Teilen Methylacrylat und 30 Gew.-Teilen Methacrylsäure enthalten. Wenn sich ein homogener Faserbrei gebildet hat (Rührdauer etwa 2 bis 4 min.) setzt man zur Flockung 7,6 g einer 10 %igen wäßrigen Lösung eines Mischpolymerisates aus 70 Gew.-Teilen Acrylamid und 30 Gew.-Teilen Diethylaminodiethylacrylat zu. Anschließend verteilt man 5 g einer 46 %igen Silikonemulsion in dem geflockten Faserbrei und gießt diesen in einen Siebkasten (Siebfläche 25 cm x 25 cm) und verteilt ihn gleichmäßig mit einem Holzspatel. Unter leichtem Vakuum wird der Faserbrei entwässert. Durch leichtes Pressen (weniger als 0,1 bar) mit einer aufgelegten Siebplatte (25 cm x 25 cm) bei gleichzeitigem leichtem Absaugen erhält man feuchte Rohplaten die im Mittel ca. 18 mm dick sind und etwa 40 bis 80 % Wasser enthalten. Das Filtrat kann für weitere Versuche wieder verwendet werden. Trocknen auf Siliconpapier im Umlufttrockenschrank bei 180°C.

| Bindemittelgehalt: (Glühverlust) | | 6,7 % |
|---|---|---|
| Dichte | | 0,31 g/cm$^3$ |
| Wasseraufnahme | nach 1 h<br>nach 2 h | 7 %<br>12 % |
| Formbeständigkeit | | weniger als 1 mm nach 212 h |

Beispiel 2

Man verrührt 560 g einer 10 % igen wäßrigen mit Ammoniak auf pH 8 eingestellten Lösung eines Bindemittelpolymerisates aus 70 Gew.-Teilen Methylmethacrylat und 30 Gew.-Teilen Methacrylsäure mit 1400 g feuergetrockneten Sand. Anschließend wird eine Form (Maße 17 cm x 2 cm x 2 cm) mit diesem Gemisch gefüllt und verdichtet. Nach diesem Prinzip stellt man mehrere Formkörper her. Diese werden bei 180°C im Trockenschrank 2 Stunden gehärtet.

| Festigkeit | 9 kg/cm$^2$. |
|---|---|

**Patentansprüche**

1. Verfahren zum Herstellen von Formteilen aus einem kleinteiligen, körnigen bis faserförmigen Material, ausgenommen Holz, als Zuschlagstoff sowie einer ein Acrylatpolymeres enthaltenden wäßrigen Bindemittellösung, wobei man den Zuschlagstoff mit der Bindemittellösung befeuchtet, in die gewünschte Form überführt und anschließend - gegebenenfalls in der Wärme - zur Trockene bringt, dadurch gekennzeichnet, daß man eine Bindemittellösung einsetzt, deren Bindemittel ein Acrylatpolymerisat ist, dessen Glasübergangsbereich mindestens 60°C beträgt und das aufgebaut ist aus

(A) 60 bis 75 Gew.-% Methylmethacrylat,

(B) 25 bis 35 Gew.-% (Meth)acrylsäure,

(C) gegebenenfalls einem $C_1$- bis $C_8$-Alkylesters der Acrylsäure, sowie

(D) 0 bis 1 Gew.-% anderer copolymerisierbarer Verbindungen,

wobei (A) + (B) + (C) + (D) = 100 Gew.-%

und deren pH-Wert nicht weniger als 7 beträgt.

**Claims**

1. A process for preparing a shaped article from a finely particulate, granular or fibrous material other than wood as aggregate and an aqueous binder solution which contains an acrylate polymer, in which the aggregate is moistened with the binder solution, made into the desired shape and then dried with or without heating, which comprises using a binder solution whose binder is an acrylate polymer whose glass transition temperature is not less than 60°C and which is formed from

(A) 60-75% by weight of methyl methacrylate,

(B) 25-35% by weight of (meth)acrylic acid,

(C) optionally a $C_1$-$C_8$-alkyl acrylate, and

(D) 0- 1% by weight of another copolymerizable compound,

where (A) + (B) + (C) + (D) = 100% by weight, and whose pH is not less than 7

**Revendications**

1. Procédé de préparation d'articles moulés à partir d'un matériau finement divisé, granulé à fibreux, mais à l'exception du bois, à titre d'additif, ainsi que d'une solution aqueuse de liant contenant un polymère d'acrylate, conformément auquel on mouille l'additif avec la solution de liant, on donne la forme souhaitée à l'additif ainsi mouillé et on l'amène ensuite à siccité - éventuellement à chaud - caractérisé en ce que l'on utilise une solution de liant dont le liant est un polymère d'acrylate dont la température de transition vitreuse atteint au moins 60°C et qui est constitué

(A) de 60 à 75% en poids de méthacrylate de méthyle,

(B) de 25 à 35% en poids d'acide (méth)acrylique,

(C) éventuellement d'un ester alkylique en $C_1$ à $C_8$ de l'acide acrylique, comme aussi

(D) 0 à 1% en poids d'autres composés copolymérisables,

où (A) + (B) + (C) + (D) = 100% en poids

et dont la valeur du pH n'est pas inférieure à 7.